# EUROPEAN PATENT APPLICATION

(11) **EP 4 191 436 A1**
(43) Date of publication of application: **07.06.2023**
(21) Application number: 21893749.8
(22) Date of filing: 03.11.2021
(51) Int. Cl.: G06F 16/35

(54) **DATA CLUSTERING METHOD AND SYSTEM, DATA STORAGE METHOD AND SYSTEM, AND STORAGE MEDIUM**

(30) Priority: 18.11.2020 CN 202011292917
(71) Applicant: Ebaotech Corporation, Shanghai 200433 (CN)
(72) Inventor: MO, Yuanwu, Shanghai 200433 (CN); SLEVIN, Ken, Shanghai 200433 (CN); CAI, Chungang, Shanghai 200433 (CN); FENG, Jie, Shanghai 200433 (CN); WANG, Jinglong, Shanghai 200433 (CN); XIONG, Hui, Shanghai 200433 (CN)
(74) Representative: Balsamo, Andrea
(86) International application number: PCT/CN2021/128330
(87) International publication number: WO 2022/105601

(57) **Abstract**

The present application relates to a data clustering method and system, a data storage method and system and a storage medium, the data clustering method comprises the following steps: the historical clustering data is analyzed, and which is decomposed into clustering atoms based on the properties of each part of the historical clustering data, and associating the clustering atoms with at least one of the clustering attributes of the historical clustering data to which the clustering atoms belong; and a clustering atomic pool is formed according to the properties of the clustering atoms, and the clustering atomic pool includes an unstructured relationship of the clustering atoms; searching the clustering atoms from the clustering atom pool to form alternative clustering atoms, wherein the search is based on target clustering attribute of the target clustering data, the clustering attribute associated with the clustering atom and the properties of the clustering atom; and the target clustering data is formed by referencing the alternative clustering atoms. The present application of data clustering method can improve the efficiency of clustering data.

## Description

### TECHNICAL FIELD

The present application relates to the field of data processing, in particular to a data clustering method and system, a data storage method and system and a storage medium.

### BACKGROUND

Since texts such as corpus data can often adopt the contents of historical texts, it is inefficient to rewrite and organize the corpus every time a new text is produced. In addition, the ready-made corpus data are generally tested for a long time, its stability and accuracy are high, if the text is rewritten, it is difficult to avoid semantic omissions.

In general, corpus data in historical texts are arranged or organized according to rules, and there are semantic relationships among them, taking these data as materials and producing new texts according to the requirements of the new texts are ways to be considered.

### SUMMARY

Embodiments of the present application provide a data clustering method and system, wherein The data storage method and system are used for decomposing historical clustering data into clustering atoms and storing the clustering atoms, furthermore, the data clustering method and system can produce new clustering data according to the clustering atom, so as to improve the efficiency of clustering data and reduce the error probability of clustering data.

According to one aspect of this application, a data clustering method is provided, comprises: the historical clustering data is analyzed, and which is decomposed into clustering atoms based on the properties of each part of the historical clustering data, and associating the clustering atoms with at least one of the clustering attributes of the historical clustering data to which the clustering atoms belong; and a clustering atomic pool is formed according to the properties of the clustering atoms, and the clustering atomic pool includes an unstructured relationship of the clustering atoms; searching the clustering atoms from the clustering atom pool to form alternative clustering atoms, wherein the search is based on target clustering attribute of the target clustering data, the clustering attribute associated with the clustering atom and the properties of the clustering atom; and the target clustering data is formed by referencing the alternative clustering atoms.

In some embodiments of this application, optionally, the historical clustering data is the historical corpus clustering data, and the clustering atom is the corpus clustering atom.

In some embodiments of this application, optionally, the search is also based on corpus matching.

In some embodiments of this application, optionally, the clustering atoms are organized in the form of a graph database and stored in a clustering atom pool.

In some embodiments of this application, optionally, the search is based on a method of searching graph.

In some embodiments of this application, optionally, the clustering atoms have hierarchies, wherein: a superior clustering atom is taken as the alternative clustering atom while its inferior clustering atom is also taken as the alternative clustering atom; and a superior clustering atom can be traced up by an inferior clustering atom which is an alternative clustering atom, and the superior clustering atom is set as the alternative clustering atom.

In some embodiments of this application, optionally, the clustering attribute comprises object, kind, region, sex, age and period.

In some embodiments of this application, optionally, if the referenced alternative clustering atoms are not compatible with each other, a hint message is generated.

According to one aspect of this application, a data storage method is provided, comprises: the historical clustering data is analyzed, and which is decomposed into clustering atoms based on the properties of each part of the historical clustering data, and associating the clustering atoms with at least one of the clustering attributes of the historical clustering data to which the clustering atoms belong; and a clustering atomic pool is formed according to the properties of the clustering atoms, and the clustering atomic pool includes an unstructured relationship of the clustering atoms.

In some embodiments of this application, optionally, the historical clustering data is the historical corpus clustering data, and the clustering atom is the corpus clustering atom.

In some embodiments of this application, optionally, the clustering atoms are organized in the form of a graph database and stored in a clustering atom pool.

In some embodiments of this application, optionally, the clustering attribute comprises object, kind, region, sex, age and period.

According to another aspect of the application, a computer-readable storage medium is provided in which an instruction is stored, characterized in that when the instruction is executed by a processor, causing the processor to perform any of the methods described above.

According to another aspect of this application, a data clustering system is provided, comprises: an analyzing unit, which is configured to analyze historical clustering data, and which is decomposed into clustering atoms based on the properties of each part of the historical clustering data, and associate the clustering atoms with at least one of the clustering attributes of the historical clustering data to which the clustering atoms belong; a pooling unit, which is configured to form a clustering atomic pool according to the properties of the clustering atoms, comprising an unstructured relationship of the clustering atoms; a search unit, which is configured to search the clustering atoms from the pooling unit to form an alternative clustering atom, wherein the search is based on target clustering attribute of the target clustering data, the clustering attribute associated with the clustering atom and the properties of the clustering atom; and an assembly unit, which is configured to form the target clustering data by referencing the alternative clustering atoms.

According to another aspect of this application, a data storage system is provided, comprises: an analyzing unit, which is configured to analyze historical clustering data, and which is decomposed into clustering atoms based on the properties of each part of the historical clustering data, and associate the clustering atoms with at least one of the clustering attributes of the historical clustering data to which the clustering atoms belong; a storage unit, which is configured to form a clustering atomic pool according to the properties of the clustering atoms, comprising an unstructured relationship of the clustering atoms.

### BRIEF DESCRIPTION OF DRAWINGS

The above and other purposes and advantages of this application are further clarified in the following details in conjunction with the attached drawings, in which the same or similar elements are indicated by the same label.
Figure 1 illustrates a schematic representation of a data clustering principle based on one embodiment of this application.
Figure 2 illustrates a data clustering method based on one embodiment of this application.
Figure 3 illustrates a data storage method based on one embodiment of this application.
Figure 4 illustrates a data clustering system based on one embodiment of this application.
Figure 5 illustrates a data storage system based on one embodiment of this application.

### DETAILED DESCRIPTION

For the purposes of brevity and illustration, this article describes the principles of this application mainly by reference to its demonstration embodiments. However, it will be easy for person skilled in the art to realize that the same principles can be applied equally to all types of data clustering methods and systems, data storage methods and systems, and storage media, these same or similar principles may be applied therein, and any such changes shall not be contrary to the true spirit and scope of this application.

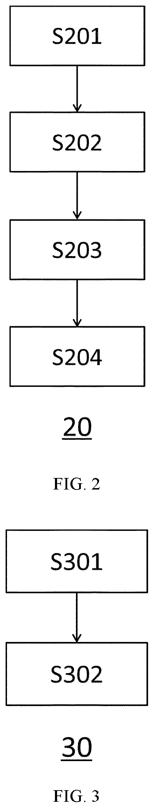

According to one aspect of the application, a data clustering method is provided. As shown in Figure 2, the data clustering method 20 includes the following steps. In step S201, the historical clustering data is analyzed, and which is decomposed into clustering atoms based on the properties of each part of the historical clustering data, wherein the clustering atoms are associated with at least one of the clustering attributes of the historical clustering data to which they belong. In step S202, according to the properties of clustering atoms, a clustering atom pool is formed, which includes the unstructured relation of clustering atoms. In step S203, the clustering atoms are found from the clustering atomic pool to form the alternative clustering atoms, search the clustering attributes of the target clustering data, the clustering attributes of the clustering atom association and the properties of the clustering atom. In step S204, target clustering data is formed by referencing alternative clustering atoms.

The historical clustering data and the target clustering data in this application are the same data in the way of using. For example, both of them are advertising text, legal text, agreement text, and other application data with reorganized clustering atoms, they can also be program code and other application data with reorganized clustering atoms, or they can be the original product used to construct contracts such as insurance financing contracts (a final contract may be formed according to the products).

Both of the historical clustering data and the target clustering data in this application include clustering atoms. In the context, the clustering atom can be the smallest unit that cannot be subdivided in the historical clustering data and the target clustering data, and once more subdivision will have no clustering significance; the clustering atom can also be a set of several smallest constituent units. Each clustering atom has its own properties, and these clustering atoms constitute the historical clustering data. For example, the text of an agreement can include terms, subject matter, liability, and so on, where the "TERMS" section, "SUBJECT MATTER" section and "LIABILITY" section could serve as clustering atoms, and the properties of these clustering atoms can be terms, subject matter, and liability. For example, regarding to program code, clustering atoms can be a function which implements particular functions, and the particular functions constitute the properties of the function.

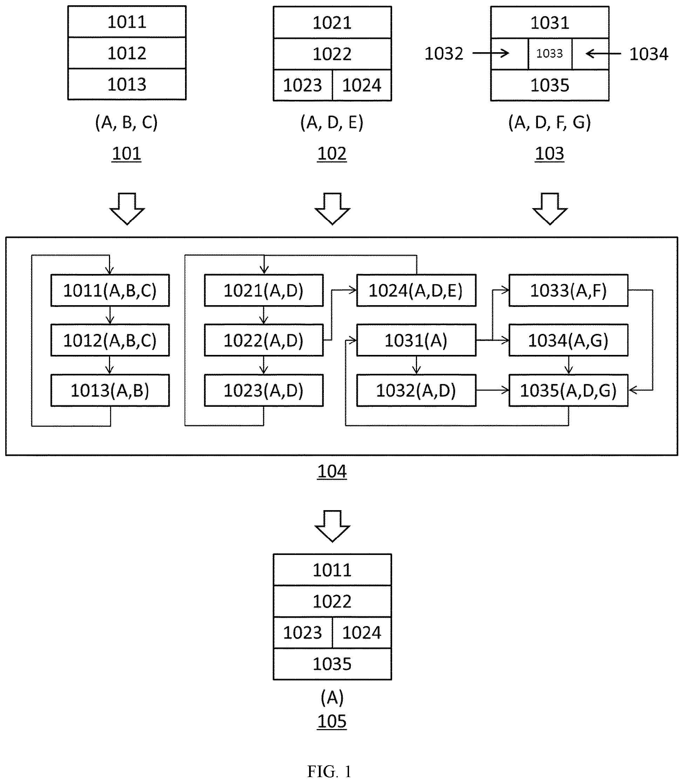

In step S201, the data clustering method 20 of the present application analyses the historical clustering data, and which is decomposed into clustering atoms based on the properties of each part of the historical clustering data. As shown in Figure 1, different resolution schemes can be used for different types of historical clustering data. For example, if each part of the historical clustering data includes a specific "Paragraph marker" (such as "TERMS" section, "SUBJECT MATTER" section and "LIABILITY" section and etc.), the historical clustering data can be decomposed by the index of "Paragraph Mark", and the properties of the decomposed "Paragraphs" can be the corresponding "Paragraph marks". And in other embodiments, historical clustering data can be text that does not include a predetermined "Paragraph mark". At this time, the properties of a "Paragraph" can be analyzed by means of semantic recognition, and the properties of a paragraph can be chosen from a number of predetermined "Properties" (such as "TERMS" section, "SUBJECT MATTER" section and "LIABILITY" section and etc.). These decomposed "Paragraphs" will form clustering atoms.

As shown in Figure 1, historical clustering data 101 includes three "Paragraphs" (which are clustering atoms) 1011, 1012 and 1013, and has corresponding "Properties" respectively; historical clustering data 103 includes five "Paragraphs" (which are clustering atoms) 1031, 1032, 1033, 1034 and 1035, and has corresponding "Properties" respectively. It can be seen that historical clustering data may be include different kinds and numbers of "Paragraphs" in the aspect of structure, and thus it is not suitable for indexing such historical clustering data in a structured form (for example, a table).

Associate the clustering atoms decomposed from the historical clustering data with at least one of the clustering attributes of the historical clustering data to which the clustering atoms belong. The clustering atoms are decomposed from historical clustering data to which the clustering atoms belong, so it inherits or relates at least part of the attributes of the historical clustering data. It is convenient to associate and reorganize clustering atoms by assigning attributes to them.

As shown in Figure 1, historical clustering data 101 includes attributes A, B and C, historical clustering data 102 includes attributes A, D and E, and historical clustering data 103 includes attributes A, D, F and G. Clustering atom 1011 and clustering atom 1012, which are decomposed from historical clustering data 101, are associated with attributes A, B and C, and clustering atom 1013 is associated with attributes A and B. Clustering atoms 1021, 1022 and 1023, which are decomposed from historical clustering data 102, are associated with attributes A and D, and clustering atom 1024 is associated with attributes A, D and E. Clustering atom 1031, which is decomposed from historical clustering data 103, is associated with attributes A, clustering atom 1032 is associated with attributes A and D, clustering atom 1033 is associated with attributes A and F, clustering atom 1034 is associated with attributes A and G, and clustering atom 1035 is associated with attributes A, D and G.

In some embodiments of this application, regarding to general semantic text, the clustering attribute may include language type, literary style and so on. Regarding to general contracts, clustering attributes can include: object (subject matter), category, region, sex, age, (effective) period, and so on. Regarding to original products, which are used to construct contracts such as insurance financing contracts, clustering attributes can also include types of insurance, time of sale, and so on. Regarding to program code, the clustering attribute can be the problem solved by the program code or the function implemented by the program code, for example, a crawler function, an API called by mailbox, and so on. These clustering attributes reflect the role of historical clustering data in solving historical technical problems, and the decomposed clustering atoms can inherit or associate these clustering attributes and be further used to solve subsequent technical problems. The clustering attributes inherited or associated by clustering atoms can be used as a basis for selecting clustering atoms, thus avoiding the low efficiency of blind selection.

In step S202, according to the properties of the clustering atoms, the data clustering method 20 of the present application forms a clustering atom pool which includes the unstructured relation of clustering atoms. In the embodiment of this application, clustering atoms are pooled to form an efficient organization. Further, it is convenient to call the clustering atoms among the associated clustering atoms. As shown in Figure 1, a possible clustering atomic pool 104 is shown in the figure, and for the purpose of clearly showing the principle of the invention, the clustering atomic pool 104 in the figure shows only some possible structural relationships between clustering atoms. Because of the multi-source of historical clustering data, these clustering atoms are usually organized in unstructured form. In some embodiments of the present application, clustering atoms of the historical clustering data may be organized and stored in the form of a graph database.

Refer to Figure 1, where clustering atoms 1011, 1012, and 1013 are from historical clustering data 101, and based on their "Paragraph" relationship to historical clustering data 101, clustering atoms (nodes) 1011, 1012, and 1013 are stored graphically in the atomic pool 104, where each arrow between nodes represents the relationship between them, and the nodes include names (for example, 1011) and attributes (for example, A, B and C). It needs to be clarified that the relationship in the figure is a fragment of the atomic pool 104. Storing the clustering atoms decomposed by the historical clustering data in the type of a graph database can be adapted to different data sources (for example, 101, 102 and 103), and the graph database is easier to deal with the relationship between data than the traditional relational database.

In step S203, the data clustering method 20 of this application searches clustering atoms from the clustering atom pool to form alternative clustering atoms. Search the clustering attributes of the target clustering data, the clustering attributes of the clustering atom association and the properties of the clustering atom. In some embodiments of this application, the search is based on a method of searching graph. For example, to construct target clustering data 105 as shown in Figure 1, and target clustering data 105 has target clustering attribute A, the five "Paragraphs" constituting target clustering data 105 are divided into four hierarchies, and have corresponding "Properties" F, G, H, I and J respectively. At this time, the clustering atoms associated with clustering attribute A can be searched from the atomic pool 104, and of which the "Properties" are F, G, H, I and J respectively. And then the clustering atoms that meet the above requirements are listed as an alternative. It needs to be clarified that, because of the association between the "Properties" of the nodes as shown in Figure 1, the search for the four hierarchies of "Paragraphs" may be done in one or more (less than four) searches. This is also due to the properties of graph search.

In step S204, the data clustering method 20 of this application forms the target clustering data by referencing the alternative clustering atoms. Many kinds of alternative choices may be gained by the search in the step S203. At this time, the target clustering data 105 can be further constructed by selecting appropriate options from these alternative clustering atoms based on the requirement. As shown in Figure 1, the target clustering data 105 includes five "Paragraphs" and four hierarchies, and the five "Paragraphs" have the "Properties" F (1011), G (1022), H (1023), I (1024) and J (1035) described above.

In some embodiments of the present application, the historical clustering data is the historical corpus clustering data, and the clustering atoms are the corpus clustering atoms. For example, historical clustering data can be application data with reorganized clustering atoms, such as agreement text, the clustering atom is each chapter of the agreement text (also known as "Paragraphs"), and these chapters can be used to be assembled into other agreement text. The chapter has the same "Properties" in the agreement text as it does in the assembled agreement text (such as "TERMS" section, "SUBJECT MATTER" section and "LIABILITY" section and etc.).

In some embodiments of this application, the search is also based on corpus matching. It is described above that the search is based on target clustering attribute of the target clustering data, the clustering attribute associated with the clustering atom and the properties of the clustering atom. And in other embodiments, it can also further restrict the search results according to the corpus matching, and make the alternative clustering atoms more semantically meet the search requirements. Corpus matching can include keyword matching, synonym matching and so on.

In some embodiments of this application, there are hierarchical relationships among clustering atoms, wherein: a superior clustering atom is taken as the alternative clustering atom while its inferior clustering atom is also taken as the alternative clustering atom; and a superior clustering atom can be traced up by an inferior clustering atom which is an alternative clustering atom, and the superior clustering atom is set as the alternative clustering atom. Further refer to Figure 1, wherein, for example, clustering atom 1022 is set as an alternative clustering atom by any of the above searching steps, at this time, the inferior clustering atoms 1023 and 1024 of clustering atom 1022 can also be selected as the alternative clustering atoms. In addition, the clustering atom 1021, which is the superior clustering atom of the clustering atom 1022, can also be used as an alternative clustering atom. In this way, the alternative clustering atoms can be further expanded, so that to reference the most suitable alternative clustering atoms among the expanded clustering atoms at scale to form target clustering data.

In some embodiments of this application, if the referenced alternative clustering atoms are not compatible with each other, a hint message is generated. In some embodiments, two or more alternative clustering atoms should not be referenced at the same time, and a hint message can be generated if there is a reference conflict. For example, if both of the clustering atom 1012 and the clustering atom 1022 have the same properties and meet the search conditions, both of the clustering atom 1012 and the clustering atom 1022 will be selected as alternative clustering atoms at the same time. Because the target clustering data 105 only needs one paragraph that meets specific properties, clustering atom 1012 and clustering atom 1022 cannot be referenced at the same time. In some embodiments, if the user initiates a reference to the clustering atom 1012 and the clustering atom 1022 at the same time, the system can alert the user the conflicts in the reference by returning a hint message. The above only shows a specific situation of "Incompatibility", which would not limit the scope of the protection of the invention.

According to one aspect of this application, a data storage method is provided. As shown in Figure 3, the data clustering method 30 comprises the following steps. In the step S301, the historical clustering data is analyzed, and which is decomposed into clustering atoms based on the properties of each part of the historical clustering data, wherein the clustering atoms are associated with at least one of the clustering attributes of the historical clustering data to which they belong. In step S302, according to the properties of clustering atoms, a clustering atom pool is formed, which includes the unstructured relation of clustering atoms.

In step S301, the historical clustering data is analyzed, and which is decomposed into clustering atoms based on the properties of each part of the historical clustering data. As shown in Figure 1, different resolution schemes can be used for different types of historical clustering data. For example, if each part of the historical clustering data includes a specific "Paragraph marker" (such as "TERMS" section, "SUBJECT MATTER" section and "LIABILITY" section and etc.), the historical clustering data can be decomposed by the index of "Paragraph Mark", and the properties of the decomposed "Paragraphs" can be the corresponding "Paragraph marks". And in other embodiments, historical clustering data can be text that does not include a predetermined "Paragraph mark". At this time, the properties of a "Paragraph" can be analyzed by means of semantic recognition, and the properties of a paragraph can be chosen from a number of predetermined "Properties" (such as "TERMS" section, "SUBJECT MATTER" section and "LIABILITY" section and etc.). These decomposed "Paragraphs" will form clustering atoms. As shown in Figure 1, historical clustering data 101 includes three "Paragraphs" (which are clustering atoms) 1011, 1012 and 1013, and has corresponding "Properties" respectively.

Associate the clustering atoms decomposed from the historical clustering data with at least one of the clustering attributes of the historical clustering data to which the clustering atoms belong. The clustering atoms are decomposed from historical clustering data to which the clustering atoms belong, so it inherits or relates at least part of the attributes of the historical clustering data. It is convenient to associate and reorganize clustering atoms by assigning attributes to them.

As shown in Figure 1, historical clustering data 101 includes attributes A, B and C. Clustering atoms 1011, 1012 and 1013 are decomposed from historical clustering data 101. Clustering atom 1011 and clustering atom 1012 are associated with attributes A, B and C, and clustering atom 1013 is associated with attributes A and B.

In some embodiments of this application, regarding to general semantic text, the clustering attribute may include language type, literary style and so on. Regarding to general contracts, clustering attributes can include: object (subject matter), category, region, sex, age, (effective) period, and so on. Regarding to original products, which are used to construct contracts such as insurance financing contracts, clustering attributes can also include types of insurance, time of sale, and so on. Regarding to program code, the clustering attribute can be the problem solved by the program code or the function implemented by the program code, for example, a crawler function, an API called by mailbox, and so on. These clustering attributes reflect the role of historical clustering data in solving historical technical problems, and the decomposed clustering atoms can inherit or associate these clustering attributes and be further used to solve subsequent technical problems. The clustering attributes inherited or associated by clustering atoms can be used as a basis for selecting clustering atoms, thus avoiding the low efficiency of blind selection.

In step S302, according to the properties of the clustering atoms, a clustering atom pool is formed, which includes the unstructured relation of clustering atoms. In the embodiment of this application, clustering atoms are pooled to form an efficient organization. Further, it is convenient to call the clustering atoms among the associated clustering atoms. As shown in Figure 1, a possible clustering atomic pool 104 is shown in the figure, and for the purpose of clearly showing the principle of the invention, the clustering atomic pool 104 in the figure shows only some possible structural relationships between clustering atoms. Because of the multi-source of historical clustering data, these clustering atoms are usually organized in unstructured form. In some embodiments of the present application, clustering atoms of the historical clustering data may be organized and stored in the form of a graph database.

Refer to Figure 1, where clustering atoms 1011, 1012, and 1013 are from historical clustering data 101, and based on their "Paragraph" relationship to historical clustering data 101, clustering atoms (nodes) 1011, 1012, and 1013 are stored graphically in the atomic pool 104, where each arrow between nodes represents the relationship between them, and the nodes include names (for example, 1011) and attributes (for example, A, B and C). It needs to be clarified that the relationship in the figure is a fragment of the atomic pool 104. Storing the clustering atoms decomposed by the historical clustering data in the type of a graph database can be adapted to different data sources (for example, 101, 102 and 103), and the graph database is easier to deal with the relationship between data than the traditional relational database.

In some embodiments of the present application, the historical clustering data is the historical corpus clustering data, and the clustering atoms are the corpus clustering atoms. For example, historical clustering data can be application data with reorganized clustering atoms, such as agreement text, the clustering atom is each chapter of the agreement text (also known as "Paragraphs"), and these chapters can be used to be assembled into other agreement text. The chapter has the same "Properties" in the agreement text as it does in the assembled agreement text (such as "TERMS" section, "SUBJECT MATTER" section and "LIABILITY" section and etc.).

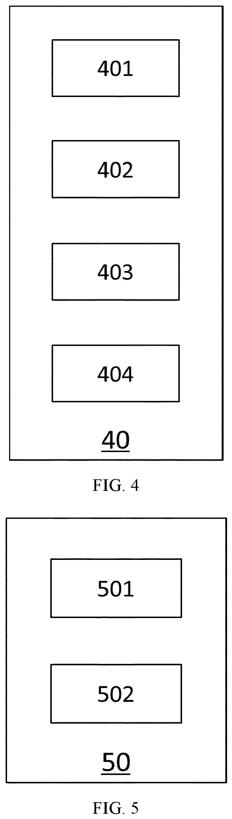

According to another aspect of this application, a data clustering system is provided. As shown in Figure 4, a data clustering system 40 comprises an analyzing unit 401, a pooling unit 402, a search unit 403 and an assembly unit 404. Among them, an analyzing unit 401 is configured to analyze historical clustering data, and which is decomposed into clustering atoms based on the properties of each part of the historical clustering data, and associate the clustering atoms with at least one of the clustering attributes of the historical clustering data to which the clustering atoms belong. As shown in Figure 1, different resolution schemes can be used for different types of historical clustering data. For example, if each part of the historical clustering data includes a specific "Paragraph marker" (such as "TERMS" section, "SUBJECT MATTER" section and "LIABILITY" section and etc.), the historical clustering data can be decomposed by the index of "Paragraph Mark", and the properties of the decomposed "Paragraphs" can be the corresponding "Paragraph marks". And in other embodiments, historical clustering data can be text that does not include a predetermined "Paragraph mark". At this time, the properties of a "Paragraph" can be analyzed by means of semantic recognition, and the properties of a paragraph can be chosen from a number of predetermined "Properties" (such as "TERMS" section, "SUBJECT MATTER" section and "LIABILITY" section and etc.). These decomposed "Paragraphs" will form clustering atoms. As shown in Figure 1, historical clustering data 101 includes three "Paragraphs" (which are clustering atoms) 1011, 1012 and 1013, and has corresponding "Properties" respectively.

The analyzing unit 401 can associate the clustering atoms with at least one of the clustering attributes of the historical clustering data to which the clustering atoms belong. The clustering atoms are decomposed from historical clustering data to which the clustering atoms belong, so it inherits or relates at least part of the attributes of the historical clustering data. It is convenient to associate and reorganize clustering atoms by assigning attributes to them.

As shown in Figure 1, historical clustering data 101 includes attributes A, B and C, historical clustering data 102 includes attributes A, D and E, and historical clustering data 103 includes attributes A, D, F and G. The analyzing unit 401 can associate clustering atom 1011 and clustering atom 1012 with attributes A, B and C, which are decomposed from historical clustering data 101. And the analyzing unit 401 can associate clustering atom 1013 with attributes A and B. The analyzing unit 401 can associate clustering atoms 1021, 1022 and 1023 with attributes A and D, which are decomposed from historical clustering data 102. And the analyzing unit 401 can associate clustering atom 1024 with attributes A, D and E. The analyzing unit 401 can associate clustering atom 1031 decomposed from historical clustering data 103 with attributes A. The analyzing unit 401 can associate clustering atom 1032 with attributes A and D. The analyzing unit 401 can associate clustering atom 1033 with attributes A and F. The analyzing unit 401 can associate clustering atom 1034 with attributes A and G. The analyzing unit 401 can associate clustering atom 1035 with attributes A, D and G.

In some embodiments of this application, regarding to general semantic text, the clustering attribute may include language type, literary style and so on. Regarding to general contracts, clustering attributes can include: object (subject matter), category, region, sex, age, (effective) period, and so on. Regarding to original products, which are used to construct contracts such as insurance financing contracts, clustering attributes can also include types of insurance, time of sale, and so on. Regarding to program code, the clustering attribute can be the problem solved by the program code or the function implemented by the program code, for example, a crawler function, an API called by mailbox, and so on. These clustering attributes reflect the role of historical clustering data in solving historical technical problems, and the decomposed clustering atoms can inherit or associate these clustering attributes and be further used to solve subsequent technical problems. The clustering attributes inherited or associated by clustering atoms can be used as a basis for selecting clustering atoms, thus avoiding the low efficiency of blind selection.

A pooling unit 402 is configured to form a clustering atomic pool according to the properties of the clustering atoms, comprising an unstructured relationship of the clustering atoms. In the embodiment of this application, clustering atoms are pooled to form an efficient organization. Further, it is convenient to call the clustering atoms among the associated clustering atoms. As shown in Figure 1, a possible clustering atomic pool 104 is shown in the figure, and for the purpose of clearly showing the principle of the invention, the clustering atomic pool 104 in the figure shows only some possible structural relationships between clustering atoms. Because of the multi-source of historical clustering data, these clustering atoms are usually organized in unstructured form. In some embodiments of the present application, clustering atoms of the historical clustering data may be organized and stored in the form of a graph database.

Refer to Figure 1, where clustering atoms 1011, 1012, and 1013 are from historical clustering data 101, and based on their "Paragraph" relationship to historical clustering data 101, clustering atoms (nodes) 1011, 1012, and 1013 are stored graphically in the atomic pool 104, where each arrow between nodes represents the relationship between them, and the nodes include names (for example, 1011) and attributes (for example, A, B and C). It needs to be clarified that the relationship in the figure is a fragment of the atomic pool 104. Storing the clustering atoms decomposed by the historical clustering data in the type of a graph database can be adapted to different data sources (for example, 101, 102 and 103), and the graph database is easier to deal with the relationship between data than the traditional relational database.

A search unit 403 is configured to search the clustering atoms from the pooling unit to form an alternative clustering atom, wherein the search is based on target clustering attribute of the target clustering data, the clustering attribute associated with the clustering atom and the properties of the clustering atom. For example, to construct target clustering data 105 as shown in Figure 1, and target clustering data 105 has target clustering attribute A, the five "Paragraphs" constituting target clustering data 105 are divided into four hierarchies, and have corresponding "Properties" F, G, H, I and J respectively. At this time, the clustering atoms associated with clustering attribute A can be searched from the atomic pool 104, and of which the "Properties" are F, G, H, I and J respectively. And then the clustering atoms that meet the above requirements are listed as an alternative. It needs to be clarified that, because of the association between the "Properties" of the nodes as shown in Figure 1, the search for the four hierarchies of "Paragraphs" may be done in one or more (less than four) searches. This is also due to the properties of graph search.

An assembly unit 404 is configured to form the target clustering data by referencing the alternative clustering atoms. Many kinds of alternative choices may be gained from the search by the search unit 403. At this time, the target clustering data 105 can be further constructed by selecting appropriate options from these alternative clustering atoms based on the requirement. As shown in Figure 1, the target clustering data 105 includes five "Paragraphs" and four hierarchies, and the five "Paragraphs" have the "Properties" F (1011), G (1022), H (1023), I (1024) and J (1035) described above.

In some embodiments of the present application, the historical clustering data is the historical corpus clustering data, and the clustering atoms are the corpus clustering atoms. For example, historical clustering data can be application data with reorganized clustering atoms, such as agreement text, the clustering atom is each chapter of the agreement text (also known as "Paragraphs"), and these chapters can be used to be assembled into other agreement text. The chapter has the same "Properties" in the agreement text as it does in the assembled agreement text (such as "TERMS" section, "SUBJECT MATTER" section and "LIABILITY" section and etc.).

In some embodiments of this application, the search is also based on corpus matching. It is described above that the search is based on target clustering attribute of the target clustering data, the clustering attribute associated with the clustering atom and the properties of the clustering atom. And in other embodiments, it can also further restrict the search results according to the corpus matching, and make the alternative clustering atoms more semantically meet the search requirements. Corpus matching can include keyword matching, synonym matching and so on.

In some embodiments of this application, there are hierarchical relationships among clustering atoms, wherein: a superior clustering atom is taken as the alternative clustering atom while its inferior clustering atom is also taken as the alternative clustering atom; and a superior clustering atom can be traced up by an inferior clustering atom which is an alternative clustering atom, and the superior clustering atom is set as the alternative clustering atom. Further refer to Figure 1, wherein, for example, clustering atom 1022 is set as an alternative clustering atom by any of the above searching steps, at this time, the inferior clustering atoms 1023 and 1024 of clustering atom 1022 can also be selected as the alternative clustering atoms. In addition, the clustering atom 1021, which is the superior clustering atom of the clustering atom 1022, can also be used as an alternative clustering atom. In this way, the alternative clustering atoms can be further expanded, so that to reference the most suitable alternative clustering atoms among the expanded clustering atoms at scale to form target clustering data.

In some embodiments of this application, if the referenced alternative clustering atoms are not compatible with each other, a hint message is generated. In some embodiments, two or more alternative clustering atoms should not be referenced at the same time, and a hint message can be generated if there is a reference conflict. For example, if both of the clustering atom 1012 and the clustering atom 1022 have the same properties and meet the search conditions, both of the clustering atom 1012 and the clustering atom 1022 will be selected as alternative clustering atoms at the same time. Because the target clustering data 105 only needs one paragraph that meets specific properties, clustering atom 1012 and clustering atom 1022 cannot be referenced at the same time. In some embodiments, if the user initiates a reference to the clustering atom 1012 and the clustering atom 1022 at the same time, the system can alert the user the conflicts in the reference by returning a hint message. The above only shows a specific situation of "Incompatibility", which would not limit the scope of the protection of the invention.

According to another aspect of this application, a data storage system is provided. As shown in Figure 5, the data storage system 50 comprises an analyzing unit 501 and a storage unit 502. Among them, the analyzing unit 501 is configured to analyze historical clustering data, and which is decomposed into clustering atoms based on the properties of each part of the historical clustering data, and associate the clustering atoms with at least one of the clustering attributes of the historical clustering data to which the clustering atoms belong. As shown in Figure 1, different resolution schemes can be used for different types of historical clustering data. For example, if each part of the historical clustering data includes a specific "Paragraph marker" (such as "TERMS" section, "SUBJECT MATTER" section and "LIABILITY" section and etc.), the historical clustering data can be decomposed by the index of "Paragraph Mark", and the properties of the decomposed "Paragraphs" can be the corresponding "Paragraph marks". And in other embodiments, historical clustering data can be text that does not include a predetermined "Paragraph mark". At this time, the properties of a "Paragraph" can be analyzed by means of semantic recognition, and the properties of a paragraph can be chosen from a number of predetermined "Properties" (such as "TERMS" section, "SUBJECT MATTER" section and "LIABILITY" section and etc.). These decomposed "Paragraphs" will form clustering atoms. As shown in Figure 1, historical clustering data 101 includes three "Paragraphs" (which are clustering atoms) 1011, 1012 and 1013, and has corresponding "Properties" respectively.

Associate the clustering atoms decomposed from the historical clustering data with at least one of the clustering attributes of the historical clustering data to which the clustering atoms belong. The clustering atoms are decomposed from historical clustering data to which the clustering atoms belong, so it inherits or relates at least part of the attributes of the historical clustering data. It is convenient to associate and reorganize clustering atoms by assigning attributes to them.

As shown in Figure 1, historical clustering data 101 includes attributes A, B and C, historical clustering data 102 includes attributes A, D and E, and historical clustering data 103 includes attributes A, D, F and G. Clustering atom 1011 and clustering atom 1012, which are decomposed from historical clustering data 101, are associated with attributes A, B and C. And clustering atom 1013 is associated with attributes A and B. Clustering atoms 1021, 1022 and 1023, which are decomposed from historical clustering data 102, are associated with attributes A and D, and clustering atom 1024 is associated with attributes A, D and E. Clustering atom 1031 decomposed from historical clustering data 103 is associated with attributes A, clustering atom 1032 is associated with attributes A and D, clustering atom 1033 is associated with attributes A and F, clustering atom 1034 is associated with attributes A and G, and clustering atom 1035 is associated with attributes A, D and G.

In some embodiments of this application, regarding to general semantic text, the clustering attribute may include language type, literary style and so on. Regarding to general contracts, clustering attributes can include: object (subject matter), category, region, sex, age, (effective) period, and so on. Regarding to original products, which are used to construct contracts such as insurance financing contracts, clustering attributes can also include types of insurance, time of sale, and so on. Regarding to program code, the clustering attribute can be the problem solved by the program code or the function implemented by the program code, for example, a crawler function, an API called by mailbox, and so on. These clustering attributes reflect the role of historical clustering data in solving historical technical problems, and the decomposed clustering atoms can inherit or associate these clustering attributes and be further used to solve subsequent technical problems. The clustering attributes inherited or associated by clustering atoms can be used as a basis for selecting clustering atoms, thus avoiding the low efficiency of blind selection.

The storage unit 502 is configured to form a clustering atomic pool according to the properties of the clustering atoms, comprising an unstructured relationship of the clustering atoms. In the embodiment of this application, clustering atoms are pooled to form an efficient organization. Further, it is convenient to call the clustering atoms among the associated clustering atoms. As shown in Figure 1, a possible clustering atomic pool 104 is shown in the figure, and for the purpose of clearly showing the principle of the invention, the clustering atomic pool 104 in the figure shows only some possible structural relationships between clustering atoms. Because of the multi-source of historical clustering data, these clustering atoms are usually organized in unstructured form. In some embodiments of the present application, clustering atoms of the historical clustering data may be organized and stored in the form of a graph database.

Refer to Figure 1, where clustering atoms 1011, 1012, and 1013 are from historical clustering data 101, and based on their "Paragraph" relationship to historical clustering data 101, clustering atoms (nodes) 1011, 1012, and 1013 are stored graphically in the atomic pool 104, where each arrow between nodes represents the relationship between them, and the nodes include names (for example, 1011) and attributes (for example, A, B and C). It needs to be clarified that the relationship in the figure is a fragment of the atomic pool 104. Storing the clustering atoms decomposed by the historical clustering data in the type of a graph database can be adapted to different data sources (for example, 101, 102 and 103), and the graph database is easier to deal with the relationship between data than the traditional relational database.

In some embodiments of the present application, the historical clustering data is the historical corpus clustering data, and the clustering atoms are the corpus clustering atoms. For example, historical clustering data can be application data with reorganized clustering atoms, such as agreement text, the clustering atom is each chapter of the agreement text (also known as "Paragraphs"), and these chapters can be used to be assembled into other agreement text. The chapter has the same "Properties" in the agreement text as it does in the assembled agreement text (such as "TERMS" section, "SUBJECT MATTER" section and "LIABILITY" section and etc.).

According to another aspect of the application, a computer readable storage medium is provided, in which instructions are stored so that the processor performs any of the methods described above when the instructions are executed by the processor. The computer readable media referred to in this application include various types of computer storage media, which may be any available media accessible by a general-purpose or special-purpose computer. For example, a computer-readable medium may include RAM, ROM, EPROM, E2PROM, registers, hard disks, removable disks, CD-ROM or other CD storage devices, disk storage devices or other magnetic storage devices, or any other temporary or non-temporary medium capable of carrying or storing desired program code units in the form of instructions or data structures and capable of being accessed by a general-purpose or specific-purpose computer or a general-purpose or specific-purpose processor. For example, the disk used in this paper usually copies data magnetically, while the disk copies data optically with a laser. The above combination shall also be included in the scope of protection of the computer readable medium. The exemplary storage medium is coupled to the processor so that the processor can read and write information from/to the storage medium. In the alternative, the storage media can be integrated into the processor. Processors and storage media can reside in an ASIC. An ASIC can reside in a user terminal. In the replacement scenario, the processor and storage media can reside in the user terminal as discrete components.

The above is only the specific implementation of this application, but the scope of protection of this application is not limited to this. Person skilled in the art may think of other feasible changes or substitutions in the light of the scope of technology disclosed in this application, which are all covered by this application. In the absence of conflict, the means of implementation of this application and the features of the means of implementation may also be combined with each other. The scope of protection of this application shall be governed by the record of the claims.

## Claims

1. A data clustering method comprises:
the historical clustering data is analyzed, and which is decomposed into clustering atoms based on the properties of each part of the historical clustering data, and associating the clustering atoms with at least one of the clustering attributes of the historical clustering data to which the clustering atoms belong; and
a clustering atomic pool is formed according to the properties of the clustering atoms, and the clustering atomic pool includes an unstructured relationship of the clustering atoms;
searching the clustering atoms from the clustering atom pool to form alternative clustering atoms, wherein the search is based on target clustering attribute of the target clustering data, the clustering attribute associated with the clustering atom and the properties of the clustering atom; and
the target clustering data is formed by referencing the alternative clustering atoms.

2. The method according to claim 1, the historical clustering data is the historical corpus clustering data, and the clustering atom is the corpus clustering atom.

3. The method according to claim 2, the search is also based on corpus matching.

4. The method according to claim 1, the clustering atoms are organized in the form of a graph database and stored in a clustering atom pool.

5. The method according to claim 4, the search is based on a method of searching graph.

6. The method according to claim 4, the clustering atoms have hierarchies, wherein:
a superior clustering atom is taken as the alternative clustering atom while its inferior clustering atom is also taken as the alternative clustering atom; and
a superior clustering atom can be traced up by an inferior clustering atom which is an alternative clustering atom, and the superior clustering atom is set as the alternative clustering atom.

7. The method according to claim 1, the clustering attribute comprises object, kind, region, sex, age and period.

8. The method according to claim 1, if the referenced alternative clustering atoms are not compatible with each other, a hint message is generated.

9. A data storage method comprises:
the historical clustering data is analyzed, and which is decomposed into clustering atoms based on the properties of each part of the historical clustering data, and associating the clustering atoms with at least one of the clustering attributes of the historical clustering data to which the clustering atoms belong; and
a clustering atomic pool is formed according to the properties of the clustering atoms, and the clustering atomic pool includes an unstructured relationship of the clustering atoms.

10. The method according to claim 9, the historical clustering data is the historical corpus clustering data, and the clustering atom is the corpus clustering atom.

11. The method according to claim 9, the clustering atoms are organized in the form of a graph database and stored in a clustering atom pool.

12. The method according to claim 9, the clustering attribute comprises object, kind, region, sex, age and period.

13. A computer readable storage medium in which instructions are stored is **characterized in that** when the instructions are executed by a processor, causing the processor to perform a method as described in claims 1-12.

14. A data clustering system comprises:
an analyzing unit, which is configured to analyze historical clustering data, and which is decomposed into clustering atoms based on the properties of each part of the historical clustering data, and associate the clustering atoms with at least one of the clustering attributes of the historical clustering data to which the clustering atoms belong;
a pooling unit, which is configured to form a clustering atomic pool according to the properties of the clustering atoms, comprising an unstructured relationship of the clustering atoms;
a search unit, which is configured to search the clustering atoms from the pooling unit to form an alternative clustering atom, wherein the search is based on target clustering attribute of the target clustering data, the clustering attribute associated with the clustering atom and the properties of the clustering atom; and
an assembly unit, which is configured to form the target clustering data by referencing the alternative clustering atoms.

15. A data storage system comprises:
an analyzing unit, which is configured to analyze historical clustering data, and which is decomposed into clustering atoms based on the properties of each part of the historical clustering data, and associate the clustering atoms with at least one of the clustering attributes of the historical clustering data to which the clustering atoms belong;
a storage unit, which is configured to form a clustering atomic pool according to the properties of the clustering atoms, comprising an unstructured relationship of the clustering atoms.
